Europäisches Patentamt

European Patent Office

Office européen des brevets

(11) Veröffentlichungsnummer: **0 003 856**
**B1**

(12) **EUROPÄISCHE PATENTSCHRIFT**

(45) Veröffentlichungstag der Patentschrift:
**11.03.81**

(21) Anmeldenummer: **79200066.3**

(22) Anmeldetag: **07.02.79**

(51) Int. Cl.³: **F 16 C 33/24,** C 22 C 1/04,
F 16 C 33/12

(54) Gleitlagerwerkstoff.

(30) Priorität: **25.02.78 DE 7805799 U**

(43) Veröffentlichungstag der Anmeldung:
**05.09.79 Patentblatt 79/18**

(45) Bekanntmachung des Hinweises auf die Patenterteilung:
**11.03.81 Patentblatt 81/10**

(84) Benannte Vertragsstaaten:
**DE FR GB IT**

(56) Entgegenhaltungen:
**DE-U-7 701 761**
**GB-A-1 149 947**
**US-A-2 691 814**
**US-A-2 838 829**

(73) Patentinhaber: **KARL-SCHMIDT GMBH,**
**Christian-Schmidt-Strasse 8/12, D-7107 Neckarsulm (DE)**

(72) Erfinder: **Baureis, Hans Paul, Höhenweg 5,**
**D-6909 Dielheim (DE)**
Erfinder: **Braus, Jürgen, OdenwaldstraBe 41,**
**D-6909 Walldorf (DE)**
Erfinder: **Funke, Rolf, Im Kirchbrändl 8, D-7522 Bad**
**Schönborn (DE)**
Erfinder: **Pfestorf, Harald, PanoramastraBe 18/1,**
**D-7107 Untereisesheim (DE)**

(74) Vertreter: **Fischer, Ernst, Dr., Reuterweg 14,**
**D-6000 Frankfurt am Main 1 (DE)**

ACTORUM AG.

## Gleitlagerwerkstoff

Die Erfindung betrifft einen Gleitlagerwerkstoff, bestehend aus einer unmittelbar auf eine metallische Stützschicht porös aufgesinterten 0,1 bis 0,5 mm dicken, aus einer pulverförmigen Legierung der Zusammensetzung 5 bis 25 Gew.% Blei, 5 bis 15 Gew.% Zinn, Rest Kupfer, gebildeten Trägerschicht, deren Poren vollständig mit Acetalharz, das gegebenenfalls bis zu 20% von einem oder mehreren die Gleitung verbessernden Werkstoffen enthält, in der Weise ausgefüllt sind, dass sich über der Trägerschicht zusätzlich noch eine 0,1 bis 0,5 mm dicke Deckschicht des gleichen Materials befindet.

Dieser aus dem DE-GM 77 01 761 bekannte Gleitlagerwerkstoff füllt die Lücken zwischen den metallischen und den für reine Trockenlager geeigneten Gleitlagerwerkstoffen aus.

In seinem grundsätzlichen Aufbau besteht dieser Gleitlagerwerkstoff aus einer metallischen Stützschicht und einer aus kugelförmigen Pulverteilchen porös aufgesinterten metallischen Trägerschicht, deren Poren mit Acetalharz in der Weise gefüllt sind, dass über der Trägerschicht eine aus dem gleichen Material bestehende Deckschicht von > 0,1 bis zu 0,5 mm Dicke angeordnet ist. In der Lauffläche können sich eine grosse Zahl von Vertiefungen befinden, die vor dem Zusammenbau von Zapfen und Lager mit einem Schmierstoff gefüllt werden.

Dieser Gleitlagerwerkstoff eignet sich ausgezeichnet zum Lauf unter Grenzschmierbedingungen, z.B. bei oszillierender Drehbewegung, hohem Druck, kleiner Geschwindigkeit, häufigem Anfahren – Halten – Anfahren unter Last. Das bedeutet, dass der wartungsarme Gleitlagerwerkstoff insbesondere für solche Lagerstellen geeignet ist, die nur von Zeit zu Zeit geschmiert werden müssen.

Der Gleitlagerwerkstoff ist besonders dort geeignet, wo eine Vollschmierung zu aufwendig ist, andererseits aber reine Trockenlagerwerkstoffe den an sie gestellten Anforderungen nicht genügen. Das Acetalharz hat mit Werten von 0,01 bis 0,1 eine vergleichsweise niedrige Reibungszahl und weist eine geringe Verschweissneigung mit den Werkstoffen des Lagerzapfens auf. Ferner zeigt der Lagerwerkstoff eine den Weissmetalllagern ähnliche Einbettfähigkeit für in den Lagerspalt eingedrungene Fremdkörper. Der Lagerwerkstoff besitzt ferner den Vorteil, dass das Acetalharz nicht quillt und demzufolge eine Verengung des Lagerspiels bei feuchter Atmosphäre nicht eintritt. Es ist jedoch nicht zu vermeiden, dass bei eventuellen Betriebsstörungen die Deckschicht so weit abgetragen wird, dass die Trägerschicht örtlich freigelegt ist. Das eingelagerte Blei steht bei der Berührung der Gegenlauffläche mit der Trägerschicht als zusätzliches Schmiermittel in feinster Verteilung zur Verfügung, so dass dadurch die Zerstörung des Lagerzapfens weitgehend verhindert wird.

In solchen Fällen hat sich häufig gezeigt, dass die Trägerschicht, insbesondere bei hohen Belastungen, zwar die erforderlichen Notlaufeigenschaften, jedoch nicht die notwendige Gestaltfestigkeit besitzt, so dass der Zapfen gegen die Stützschicht läuft und dabei erheblich in Mitleidenschaft gezogen wird.

Es ist daher die Aufgabe der vorliegenden Erfindung, die Beschädigung des Lagerzapfens zu verhindern, auch wenn die Trägerschicht beschädigt, d.h. örtlich freigelegt, worden ist.

Die Lösung dieser Aufgabe besteht erfindungsgemäss darin, dass die einzelnen Partikel der porös aufgesinterten Trägerschicht die Form von gestreckten Knollen aufweisen.

Die höhere Belastbarkeit der Trägerschicht wird dadurch erzielt, dass durch die erfindungsgemässe Gestalt der einzelnen Pulverpartikel der porös aufgesinterten Trägerschicht die sich berührenden Auf- bzw. Anlageflächen benachbarter Partikel vergrössert sind.

Im übrigen konnte beobachtet werden, dass das in den Partikeln der Trägerschicht enthaltene Blei im Bereich ihrer Randzonen, in denen es mit den im Thermo- oder Duroplast enthaltenen Bleipartikeln zur Berührung kommt, aus den Partikeln der Trägerschicht auswandert und in das Acetalharz an die Stelle von durch Verschleiss verbrauchtem Blei tritt.

Das die Poren der Trägerschicht ausfüllende und die Deckschicht bildende Acetalharz kann als die Gleitung verbessernde Werkstoffe $MoS_2$, Graphit, PbO, Polyamid, Polyimid, mikroverkapselte Schmiermittel einzeln oder zu mehreren enthalten.

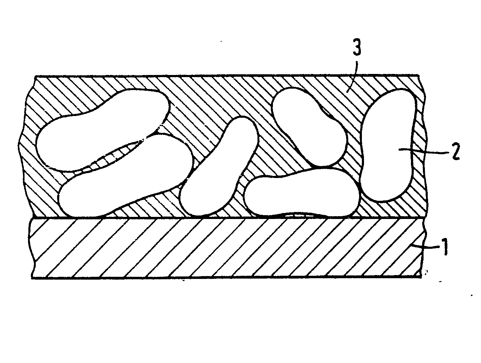

Der erfindungsgemässe Gleitlagerwerkstoff ist in der Zeichnung im Querschnitt beispielhaft dargestellt.

Auf die Stahlstützschicht 1 ist die aus 10 Gew.% Blei, 10 Gew.% Zinn, Rest Kupfer, bestehende Trägerschicht 2 porös aufgesintert, wobei die Poren mit Polyoxymethylen 3, das auch die Deckschicht bildet, ausgefüllt sind.

Die die Form von gestreckten Knollen aufweisenden Partikel werden in bekannter Weise so hergestellt, dass die in einem oder mehreren Strahlen aus entsprechend gestalteten Bodenöffnungen eines Tiegels austretende Metallschmelze durch quer dazu geführte Wasserstrahlen abgeschreckt wird. Bei der dabei erfolgenden Erstarrung der Metallschmelze bilden sich die die Form von gestreckten Knollen besitzenden Partikel.

**Patentansprüche**

1. Gleitlagerwerkstoff, bestehend aus einer unmittelbar auf eine metallische Stützschicht porös aufgesinterten 0,1 bis 0,5 mm dicken, aus einer pulverförmigen Legierung der Zusammensetzung 5 bis 25 Gew.% Blei, 5 bis 15 Gew.% Zinn, Rest Kupfer, gebildeten Trägerschicht, deren Poren vollständig mit Acetalharz, das gegebenenfalls bis zu 20% von einem oder mehreren die Gleitung verbessernden Werkstoffen enthält, in der Weise ausgefüllt sind, dass sich über der Trägerschicht zusätzlich noch eine 0,1 bis 0,5 mm dicke Deckschicht des gleichen Materials befindet, dadurch gekennzeichnet, dass die einzelnen Partikel der porös aufgesinterten Trägerschicht die Form von gestreckten Knollen aufweisen.

2. Lagerwerkstoff nach Anspruch 1, dadurch gekennzeichnet, dass das Acetalharz als die Gleitung verbessernde Werkstoffe MoS$_2$, Graphit, PbO, Polyamid, Polyimid, mikroverkapselte Schmiermittel einzeln oder zu mehreren enthält.

**Claims**

1. A bearing material, wherein the material comprises a porous metallic carrier layer which is from 0,1 to 0,5 mm thick sintered on to a metallic supporting layer, the pores of the carrier layer being filled completely with an acetal resin and wherein the carrier layer consists of an alloy of the composition 5 to 25% by weight lead, 5 to 15% by weight tin, the remainder copper and wherein a layer of said acetal resin 0,1 to 0,5 mm thick is present above said carrier layer and wherein in case said acetal resin contains up to 20% by weight of one or more additional materials for improving the sliding properties of the bearing material and wherein the particles of said carrier layer are formed as elongated nodules.

2. A bearing material as claimed in claim 1, wherein said additional material containing in the acetal resin is molybdenum disulphide, graphite, lead monoxide, a polyamide, a polyimide, a microencapsulated lubricant or two or more thereof.

**Revendications**

1. Matériau pour palier, lisse constitué d'une couche support en un alliage pulvérulent contenant de 5 à 25% en poids de plomb, de 5 à 15% en poids d'étain, le reste étant du cuivre, de 0,1 à 0,5 mm d'épaisseur, déposé par frittage tout en étant poreux directement sur une couche de protection métallique et dont les pores sont entièrement emplies d'une résine acétal, laquelle renferme, le cas échéant, jusqu'à 20% d'un ou de plusieurs matériaux améliorant le glissement, de manière à ce qu'il y ait au-dessus de la couche support en plus une couche supérieure en le même matériau, d'une épaisseur supplémentaire de 0,1 à 0,5 mm, caractérisé en ce que les particules de la couche support déposée de manière à être poreuse présentent la forme de tubercules oblongues.

2. Matériau suivant la revendication 1, caractérisé en ce que la résine acétale contient à titre de matériau améliorant le glissement, du MoS$_2$, du graphite, du PbO, un polyamide, un polyimide, un agent lubrifiant en microcapsules ou un mélange de ceux-ci.